# EUROPEAN PATENT APPLICATION

(11) **EP 4 422 309 A1**
(43) Date of publication of application: **28.08.2024**
(21) Application number: 21960977.3
(22) Date of filing: 21.10.2021
(51) Int. Cl.: H04W 72/04

(54) **METHOD AND APPARATUS FOR SENDING AUXILIARY INFORMATION, METHOD AND APPARATUS FOR RECEIVING AUXILIARY INFORMATION, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2021/125351
(87) International publication number: WO 2023/065227

(57) **Abstract**

Provided in the present disclosure are a method and apparatus for sending auxiliary information, a method and apparatus for receiving auxiliary information, and a storage medium. The method for sending auxiliary information comprises: sending auxiliary information to a second user equipment (UE), wherein the auxiliary information is used for indicating the capability of a first UE acquiring system information. In the embodiments of the present disclosure, a first user equipment sends auxiliary information to a second user equipment, and the second user equipment can learn, according to the auxiliary information, the capability of the first user equipment acquiring system information. Therefore, the second user equipment can send, to the first user equipment, a system information request conforming to the acquisition capability of the first user equipment. Therefore, the first user equipment can acquire, within the capability range thereof and from a network device, the system information required by the second user equipment, thereby ameliorating the problem of the acquisition of system information failing due to the insufficient acquisition capability of the first user equipment.

## Description

### TECHNICAL FIELD

The disclosure relates to the field of wireless communication technologies, more particular to, a method and an apparatus for transmitting auxiliary information, a method and an apparatus for receiving auxiliary information, and a storage medium.

### BACKGROUND

In a wireless communication system, such as a New Radio (NR) system, a communication interface between a User Equipment (UE) and a base station is called a Uu interface. In order to support direct communication between UEs, a sidelink communication mode is introduced, and the interface between UEs is referred to as PC-5. Three transmission modes are supported on the sidelink, namely, unicast, multicast and broadcast.

In a relay communication, the UE does not directly connect to the base station, but realizes communication with the base station through the relay of another UE. In the relay communication, the UE that is not directly connected to the base station is called as a remote UE, and the UE that is directly connected to the base station is called as a relay UE.

When the remote UE and the relay UE are in an idle state or an inactive state, the remote UE may transmit a system information request to the relay UE. After receiving the system information request, the relay UE may obtain system information from the base station and transfer the system information to the remote UE. However, in the process of obtaining the system information through the relay UE, there is a problem of failing to obtain the system information or incompletely obtaining the system information.

### SUMMARY

In view of this, the disclosure provides a method and an apparatus for transmitting auxiliary information, a method and an apparatus for receiving auxiliary information, and a storage medium.

According to a first aspect of embodiments of the disclosure, a method for transmitting auxiliary information, performed by a first user equipment (UE), is provided. The method includes:

transferring auxiliary information to a second UE, in which the auxiliary information is configured to indicate a capability of the first UE to obtain system information.

With this method, the first UE can transfer the auxiliary information to the second UE, and the second UE can learn the capability of the first UE to obtain the system information based on the auxiliary information. Therefore, the second UE can transmit a system information request that conforms to an acquisition capability of the first UE to the first UE, so that the first UE is capable to obtain the system information from a network device within its own capability. Therefore, a problem of failing to acquire the system information due to an insufficient acquisition capability of the first UE can be solved.

In a possible implementation,
the auxiliary information includes at least one of:
indication information of system information that is capable to be obtained from a network device;
indication information of system information that is capable to be forwarded to the second UE;
version information of a standard version of the system information that is capable to be obtained from the network device; or
capability indication information of a transmission capability of a Uu interface.

In a possible implementation,
the method further includes:
receiving a system information request message from the second UE, in which the system information request message includes at least one of:
indication information for requesting system information;
indication information for requesting system information transmitted to the second UE;
version information for requesting a standard version of system information obtained from a network device; or
version information of a standard version of supported system information.

In a possible implementation,
the indication information includes a system information block (SIB) identifier or a system information identifier.

In a possible implementation,
the system information identifier is a bit stream, each bit in the bit stream indicating system information indicated by an entry in a system information scheduling list in a first SIB (SIB 1).

In a possible implementation,
the method further includes:
transmitting a request for obtaining system information corresponding to the system information request message to the network device, and transferring the system information to the second UE after successfully receiving the system information from the network device.

In a possible implementation,
the method further includes:
transmitting a request for obtaining system information corresponding to the system information request message to the network device, and transmitting a system information acquisition failure indication to the second UE after the system information is not successfully received from the network device.

According to a second aspect of embodiments of the disclosure, a method for receiving auxiliary information, performed by a second UE, is provided. The method includes:
receiving auxiliary information transferred by a first UE, in which the auxiliary information is configured to indicate a capability of the first UE to obtain system information.

Through this method, the second UE can learn the capability of the first UE to obtain the system information based on the auxiliary information transferred by the first UE. Thus, the second UE may transmit a system information request that conforms to an acquisition capability of the first UE to the first UE. In this way, the first UE is capable to obtain the system information required by the second UE from a network device within the capability of the first UE, and thus the problem of failing to acquire the system information due to an insufficient acquisition capability of the first UE can be solved.

In a possible implementation,
the method further includes:
in response to determining, based on the auxiliary information, that the first UE is incapable to obtain or transmit system information required by the second UE, performing at least one of following operations based on the auxiliary information:
triggering reselection of the first UE;
entering a connected state from an idle state or an inactive state; or
not transmitting a system information request message to the first UE.

In a possible implementation,
the method further includes:
in response to determining, based on the auxiliary information, that the first UE is capable to obtain system information required by the second UE, transmitting a system information request message to the first UE.

In a possible implementation,
the system information request message includes at least one of:
indication information of system information that is capable to be obtained from a network device;
indication information of system information that is capable to be forwarded to the second UE;
version information of a standard version of the system information that is capable to be obtained from the network device; or
capability indication information of a transmission capability of a Uu interface.

According to a third aspect of embodiments of the disclosure, a communication device is provided. The communication device may be used to perform the steps performed by the first UE in the first aspect described above or in any possible design of the first aspect. The first UE may implement the respective functions in the above methods in the form of a hardware structure, a software module, or a combination of the hardware structure and the software module.

When the communication device shown in the third aspect is implemented through a software module, the communication device may include a transceiver module, and the transceiver module is configured to support the communication device in performing communication.

When executing the steps described in the first aspect above, the transceiver module is configured to transfer auxiliary information to a second UE, in which the auxiliary information is configured to indicate a capability of the first UE to obtain system information.

According to a fourth aspect of embodiments of the disclosure, a communication device is provided. The communication device may be used to perform the steps performed by the second UE in the second aspect described above or in any possible design of the second aspect. The second UE may implement the respective functions in the above methods in the form of a hardware structure, a software module, or a combination of the hardware structure and the software module.

When the communication device shown in the fourth aspect is implemented through a software module, the communication device may include a transceiver module, and the transceiver module is configured to support the communication device in performing communication.

When executing the steps described in the second aspect above, the transceiver module is configured to receive auxiliary information transferred by a first UE, in which the auxiliary information is configured to indicate a capability of the first UE to obtain system information.

According to a fifth aspect of embodiments of the disclosure, a communication device is provided. The communication device includes: a processor and a memory. The memory is configured to store a computer program. The processor is configured to execute the computer program to implement the first aspect or any possible design of the first aspect.

According to a sixth aspect of embodiments of the disclosure, a communication device is provided. The communication device includes: a processor and a memory. The memory is configured to store a computer program. The processor is configured to execute the computer program to implement the second aspect or any possible design of the second aspect.

According to a seventh aspect of embodiments of the disclosure, a computer-readable storage medium having instructions (a computer program or a program) stored thereon is provided. When the instructions (a computer program or a program) are called and executed on a computer, the computer is caused to perform the first aspect or any possible design of the first aspect.

According to an eighth aspect of embodiments of the disclosure, a computer-readable storage medium having instructions (a computer program or a program) stored thereon is provided. When the instructions (a computer program or a program) are called and executed on a computer, the computer is caused to perform the second aspect or any possible design of the second aspect.

It should be understood that the above general description and the following detailed description are exemplary and explanatory only, and do not limit the disclosure.

### BRIEF DESCRIPTION OF THE DRAWINGS

The accompanying drawings illustrated herein are used to provide a further understanding of embodiments of the disclosure and constitute a part of the disclosure, and the schematic embodiments of the disclosure and illustrations thereof are used to explain the embodiments of the disclosure and do not constitute an undue limitation of the embodiments of the disclosure.

The accompanying drawings, which are incorporated in and constitute a part of this specification, illustrate embodiments consistent with the disclosure and, together with the description, serve to explain principles of the embodiments of the disclosure.
FIG. 1 is a schematic diagram of a wireless communication system provided by an embodiment of the disclosure.
FIG. 2 is a flowchart of a method for transmitting auxiliary information according to an exemplary embodiment.
FIG. 3 is a flowchart of a method for transmitting auxiliary information according to an exemplary embodiment.
FIG. 4 is a flowchart of a method for transmitting auxiliary information according to an exemplary embodiment.
FIG. 5 is a block diagram of an apparatus for transmitting auxiliary information according to an exemplary embodiment.
FIG. 6 is a block diagram of an apparatus for transmitting auxiliary information according to an exemplary embodiment.
FIG. 7 is a block diagram of an apparatus for receiving auxiliary information according to an exemplary embodiment.
FIG. 8 is a block diagram of an apparatus for transmitting system information according to an exemplary embodiment.
FIG. 9 is a block diagram of an apparatus for transmitting system information according to an exemplary embodiment.

### DETAILED DESCRIPTION

Embodiments of the disclosure will be further described with reference to the accompanying drawings and specific implementations.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the embodiments of the disclosure. Instead, they are merely examples of apparatuses and methods consistent with aspects related to the disclosure as recited in the appended claims.

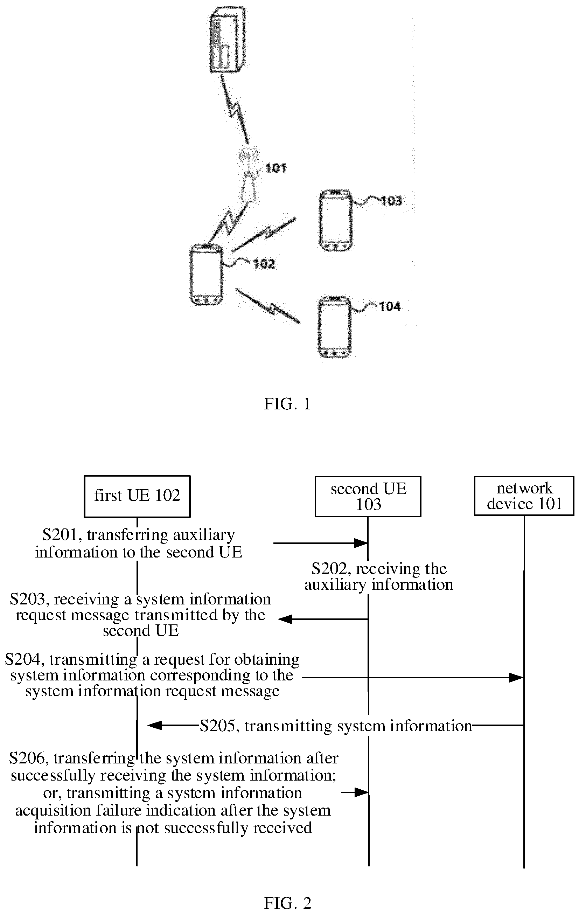

As illustrated in FIG. 1, the method for transmitting auxiliary information provided by the embodiment of the disclosure can be applied to a wireless communication system 100. The wireless communication system may include, but is not limited to, a network device 101 and a plurality of user equipment (UEs) that are configured to support carrier aggregation. The UEs may be connected to multiple carrier components of the network device 101, and the multiple carrier components includes a primary carrier component and one or more secondary carrier components.

Among the multiple UEs, a UE that is directly connected to the network device 101 and provides a relay function is called as a relay UE 102, and a UE that is not directly connected to the network device 101 is called as a remote UE 103. The relay UE 102 communicates with the remote UE 103 based on a sidelink, and the remote UE 103 communicates with the network device 101 through the relay UE 102.

It should be understood that the above wireless communication system 100 can be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The above-described UE may be a UE, a terminal, an access terminal, a terminal unit, a terminal station, a mobile station (MS), a remote station, a remote terminal, a mobile terminal, a wireless communication device, a terminal agent, or a user device. The UE may have a wireless transceiver function and is capable of communicating (e.g., wirelessly communicating) with one or more network devices in one or more communication systems and accepting a network service provided by the network device 101. The network device 101 includes, but is not limited to, the base station shown below.

The UE may be a cellular phone, a cordless phone, a session initiation protocol (SIP) phone, a wireless local loop (WLL) station, a personal digital assistant (PDA) device, a handheld device having a wireless communication function, a computing device or other processing devices connected to a wireless modem, a vehicle-mounted device, a wearable device, a UE in a future 5G network or a UE in a future evolved PLMN network, etc.

The network device 101 may be an access network device (or an access network site). The access network device refers to a device that provides a network access function, such as a radio access network (RAN) base station. The network device may include a base station (BS) device, or include the BS device and a radio resource management device for controlling the BS device. The network device may also include a relay station (a relay device), an access point, a base station in a future 5G network, a base station in a future evolved PLMN network, or a NR base station. The network device may be a wearable device, an in-vehicle device, or a communication chip with a communication module.

For example, the network device 101 includes, but is not limited to, a next generation base station in 5G (gNB, which is short for gnodeB), an evolved node B (eNB) in an LTE system, a radio network controller (RNC), a node B (NB) in a wideband code division multiple access (WCDMA) system, a radio controller under a CRAN system, a base station controller (BSC), a base transceiver station (BTS) in a Global System for Mobile Communication (GSM) or a Code Division Multiple Access (CDMA) system, a home BS (such as a home evolved node B or a home node B (HNB)), a baseband unit (BBU), a transmitting and receiving point (TRP), a transmitting point (TP), or a mobile switching center.

During a communication process between the UE and the base station, if a certain system information block (SIB) is not broadcasted, a UE in an idle state or an inactive state may transmit a system information request to the base station. After receiving the system information request, the base station broadcasts a corresponding SIB, and the UE obtains the SIB through broadcasting.

In relay communication, the remote UE 103 may obtain the SIB through the relay UE 102. In this process, the system information request is related to a capability of the relay UE 102, and thus a reason for failing to obtain the system information or incompletely obtaining the system information may include followings

A first reason is that the relay UE 102 lacks a corresponding capability, thus the relay UE 102 is incapable to obtain the system information required by the remote UE 103 and system information of a corresponding version.

A second reason is that capabilities of the remote UE 103 and the relay UE 102 are different. For example, if the relay UE 102 does not have the capability to obtain the system information required by the remote UE 103, the relay UE 102 is incapable to obtain the corresponding system information.

Both the above reasons may lead to a failure in requesting the system information or incomplete system information transferred by the relay UE 102, resulting in a waste of resources.

Embodiments of the disclosure provide a method for transmitting auxiliary information. FIG. 2 is a flowchart of a method for transmitting auxiliary information according to an exemplary embodiment. As illustrated in FIG. 2, the method includes the following steps.

Step S201, a first UE 102 transfers auxiliary information to a second UE 103, in which the auxiliary information is configured to indicate a capability of the first UE 102 to obtain system information.

Step S202, the second UE 103 receives the auxiliary information transferred by the first UE 102, in which the auxiliary information is configured to indicate the capability of the first UE 102 to obtain system information.

Step S203, the first UE 102 receives a system information request message transmitted by the second UE 103.

Step S204, the first UE 102 transmits a request for obtaining system information corresponding to the system information request message to a network device 101.

Step S205, the network device 101 transmits the system information to the first UE 102.

Step S206, the first UE 102 transfers the system information to the second UE 103 after successfully receiving the system information, or, transmits a system information acquisition failure indication when the system information is not successfully received.

In some possible implementations, the system information (SI) is necessary information provided by the network device 101 for UEs in a RRC_IDLE state and a RRC_CONNECTED state, such as cell access information and public radio resource configuration information, or cell selection and cell reselection information. The network device 101 generally broadcasts the SI via a radio resource control (RRC) message.

In some possible implementations, the first UE 102 is a relay UE 102, and the second UE 103 is a remote UE 103.

In some possible implementations, before transmitting the system information request message, the first UE 102 transfers the auxiliary information to the second UE 103, and the second UE103 can learn the capability of the first UE 102 to obtain SI based on the auxiliary information.

In embodiments of the disclosure, the first UE 102 transfers the auxiliary information to the second UE 103, and the second UE103 can learn the capability of the first UE 102 to obtain the SI based on the auxiliary information. Thus, the second UE 103 can transmit the system information request that conforms to an acquisition capability of the first UE 102 to the first UE 102, so that the first UE 102 is capable to obtain the SI required by the second UE 103 from the network device 101 within the capability of the first UE 102, which solves a problem of failing to obtain the SI due to an insufficient acquisition capability of the first UE 102.

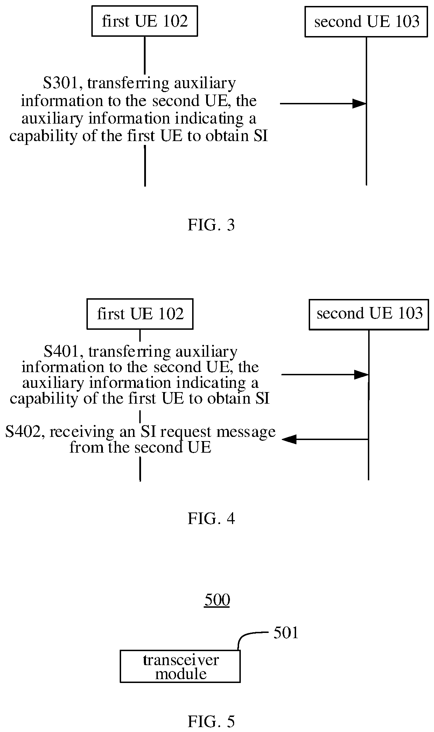

Embodiments of the disclosure provide a method for transmitting auxiliary information, which is performed by a first UE 102. FIG. 3 is a flowchart of a method for transmitting auxiliary information according to an exemplary embodiment. As illustrated in FIG. 3, the method includes the following steps.

Step S301, the first UE 102 transfers auxiliary information to a second UE 103, in which the auxiliary information is configured to indicate a capability of the first UE 102 to obtain SI.

In some possible implementations, the first UE 102 is a relay UE 102, and the second UE 103 is a remote UE 103.

In some possible implementations, the relay UE 102 may transfer the auxiliary information through sidelink unicasting, or through sidelink broadcasting.

In embodiments of the disclosure, the relay UE 102 may transfer the auxiliary information to the remote UE 103, and the remote UE 103 can learn the capability of the relay UE 102 to obtain SI based on the auxiliary information. Thus, the remote UE 103 can transmit a system information request that conforms to an acquisition capability of the relay UE 102 to the relay UE 102, so that the relay UE 102 is capable to obtain the SI from a network device 101 within its own capability, which solves the problem of failing to obtain the SI due to an insufficient acquisition capability of the relay UE 102.

Embodiments of the disclosure provide a method for transmitting auxiliary information, which is performed by a first UE 102. The method includes the following steps.

Step S301, the first UE 102 transfers auxiliary information to a second UE 103, in which the auxiliary information is configured to indicate a capability of the first UE 102 to obtain SI.

The auxiliary information includes at least one of:
indication information of SI that is capable to be obtained from a network device;
indication information of SI that is capable to be forwarded to the second UE 103;
version information of a standard version of the SI that is capable to be obtained from the network device; or
capability indication information of a transmission capability of a Uu interface.

In some possible implementations, the Uu interface is a communication interface between a UE and a base station.

In some possible implementations, the indication information of the SI is configured to indicate a type of SI that is capable to be obtained from the network device 101. A type of an SIB in the SI includes: SIB1 to SIB 13.

In an example, the indication information of the SI is configured to indicate that SIB1 to SIB9 are capable to be obtained from the network device 101, but SIB1 to SIB 10 are incapable to be obtained.

In some possible implementations, the capability indication information of the transmission capability of the Uu interface is configured to indicate whether a specific communication capability is supported. The specific communication capability can be default or preset, and the specific communication capability is modifiable.

In embodiments of the disclosure, the relay UE 102 may transfer different aspects of auxiliary information to the remote UE 103, so that the remote UE 103 can accurately learn the capability of the relay UE 102 to obtain SI, thereby facilitating transmitting a system information request message that is conformable with the capability of the relay UE 102.

Embodiments of the disclosure provide a method for transmitting auxiliary information, which is performed by a first UE 102. FIG. 4 is a flowchart of a method for transmitting auxiliary information according to an exemplary embodiment. As illustrated in FIG. 4, the method includes the following steps.

Step S401, the first UE 102 transfers auxiliary information to a second UE 103, in which the auxiliary information is configured to indicate a capability of the first UE 102 to obtain SI.

Step S402, the first UE 102 receives a system information request message from the second UE 103, in which the SI request message includes at least one of:
indication information for requesting SI;
indication information for requesting SI transmitted to the second UE 103;
version information for requesting a standard version of SI obtained from the network device 101; and
version information of a standard version of supported SI.

In embodiments of the disclosure, after transferring the auxiliary information, the relay UE 102 may receive the SI request message from the remote UE 103 that is conformable with its own capability, so as to be capable to accurately obtain the required SI from the network device.

Embodiments of the disclosure provide a method for transmitting auxiliary information, which is performed by a first UE 102.

The method includes: step S301, the first UE 102 transferring auxiliary information to a second UE 103, in which the auxiliary information is configured to indicate a capability of the first UE 102 to obtain SI.

The auxiliary information includes at least one of:
indication information of SI that is capable to be obtained from a network device;
indication information of SI that is capable to be forwarded to the second UE 103;
version information of a standard version of the SI that is capable to be obtained from the network device; or
capability indication information of a transmission capability of a Uu interface.

Or,
the method includes steps S401 and S402, in which the indication information is an SIB identifier or an SI identifier.

In embodiments of the disclosure, based on the indication information in the auxiliary message forwarded by the relay UE 102, the remote UE 103 can learn the SIB identifier or the SI identifier that is capable to be forwarded by the relay UE 102. According to the indication information in the SI request message transmitted by the remote UE 103, the relay UE 102 can learn the SIB identifier or the SI identifier required by the remote UE 103.

Embodiments of the disclosure provide a method for transmitting auxiliary information, which is performed by a first UE 102.

The method includes: step S301, the first UE 102 transferring auxiliary information to a second UE 103, in which the auxiliary information is configured to indicate a capability of the first UE 102 to obtain SI.

In the method,
the auxiliary information includes at least one of:
indication information of SI that is capable to be obtained from a network device;
indication information of SI that is capable to be forwarded to the second UE 103;
version information of a standard version of the SI that is capable to be obtained from the network device; or
capability indication information of a transmission capability of a Uu interface.

Or,
the method includes steps S401 and S402, in which the indication information includes an SIB identifier or an SI identifier.

In the method,
the SI identifier is a bit stream, and each bit in the bit stream is configured to indicate SI indicated by an entry in an SI scheduling list in a first SIB (SIB1). Other SIBs can be scheduled according to the SI scheduling list (i.e., scheduling Info List) in the SIB1.

In some possible implementations, a position of each bit in the bit stream corresponds to an entry of a corresponding position in the SI scheduling list in the SIB1.

For example, a first bit in the bit stream corresponds to SI indicated by a first entry in the SI scheduling list, and a second bit in the bit stream corresponds to SI indicated by a second entry in the SI scheduling list.

Embodiments of the disclosure provide a method for transmitting auxiliary information, which is performed by the first UE 102. The method includes the following steps.

Step S401, the first UE 102 transfers auxiliary information to a second UE 103, in which the auxiliary information is configured to indicate a capability of the first UE 102 to obtain SI.

Step S402, the first UE 102 receives an SI request message from the second UE 103, in which the SI request message includes at least one of:
indication information for requesting SI;
indication information for requesting SI transmitted to the second UE 103;
version information for requesting a standard version of SI obtained from the network device 101; or
version information of a standard version of supported SI.

Step S403, the first UE 102 transmits a request for obtaining SI corresponding to the SI request message to the network device 101, and transfers the SI to the second UE 103 after successfully receiving the SI from the network device 101.

Embodiments of the disclosure correspond to a situation in which the relay UE 102 successfully acquires the SI required by the remote UE 103 from the network device 101. In this embodiment, the relay UE 102 transmits the request for obtaining the SI to the network device 102 according to the SI request message of the remote UE 103, and transfers the obtained SI to the remote UE 103, to realize the transferring of the SI.

Embodiments of the disclosure provide a method for transmitting auxiliary information, which is performed by a first UE 102. The method includes the following steps.

Step S401, the first UE 102 transfers auxiliary information to a second UE 103, in which the auxiliary information is configured to indicate a capability of the first UE 102 to obtain SI.

Step S402, the first UE 102 receives an SI request message from the second UE 103, in which the SI request message includes at least one of:
indication information for requesting SI;
indication information for requesting SI transmitted to the second UE 103;
version information for requesting a standard version of SI obtained from the network device 101; or
version information of a standard version of supported SI.

Step S404, the first UE 102 transmits a request for obtaining SI corresponding to the SI request message to the network device 101, and transmits an SI acquisition failure indication to the second UE 103 when the SI is not successfully received from the network device 101.

Embodiments of the disclosure correspond to a situation in which the relay UE 102 fails to acquire the SI required by the remote UE 103 from the network device 101. In this embodiment, if the relay UE 102 fails to acquire the SI, it transmits the SI acquisition failure indication to feed back a situation of obtaining the SI of the remote UE 103 in time, to facilitate the remote UE 103 to perform other processes or operations.

Embodiments of the disclosure provide a method for receiving auxiliary information, which is performed by a second UE 103. The method includes the following steps.

Step S501, the second UE 103 receives auxiliary information transferred by a first UE 102, in which the auxiliary information is configured to indicate a capability of the first UE 102 to obtain SI.

In some possible implementations, if SI required by a remote UE 103 is beyond the capability of a relay UE 102, i.e., the relay UE 102 cannot obtain the SI, the remote UE 103 may not transmit an SI request message to the relay UE 102.

In embodiments of the disclosure, according to the auxiliary information transferred by the relay UE 102, the remote UE 103 can learn the capability of the relay UE 102 to obtain SI. Thus, the remote UE 103 can transmit an SI request that conforms to an acquisition capability of the relay UE 102 to the relay UE 102, so that the relay UE 102 can acquire the SI from the network device 101 within its own capability, to solve the problem of failing to acquire the SI due to an insufficient acquisition capability of the relay UE 102.

Embodiments of the disclosure provide a method for receiving auxiliary information, which is performed by a second UE 103. In addition to step S501, the method further includes:
in response to determining, based on the auxiliary information, that the first UE 102 is incapable to obtain or transmit SI required by the second UE 103, performing at least one of following operations based on the auxiliary information:
triggering reselection of the first UE 102;
entering a connected state from an idle state or an inactive state; or
not transmitting an SI request message to the first UE 102.

In embodiments of the disclosure, if the capability of the relay UE 102 does not meet the need of the remote UE 103, the remote UE 103 may perform a variety of operations to receive the SI and avoid transmitting an SI request message to a relay UE 102 with an insufficient capability.

Embodiments of the disclosure provide a method for receiving auxiliary information, which is performed by a second UE 103. In addition to step S501, the method further includes:
in response to determining, based on the auxiliary information, that the first UE 102 is capable to obtain SI required by the second UE 103, transmitting an SI request message to the first UE.

In the embodiment of the disclosure, the remote UE 103 transmits the SI request message to the eligible relay UE 102, so as to successfully obtain the SI.

In a possible implementation, the system information request message includes at least one of:
indication information of SI that is capable to be obtained from a network device 101;
indication information of SI that is capable to be forwarded to the second UE 103;
version information of a standard version of the SI that is capable to be obtained from the network device 101; or
capability indication information of a transmission capability of a Uu interface.

Embodiments of the disclosure provide a method for transmitting SI, which is performed by a network device 101. The method further includes the following steps.

Step S601, the network device 101 receives a request for obtaining SI corresponding to an SI request message transmitted by a first UE 102. The SI request message is received by the first UE 102 from a second UE 103 after the first UE 102 transfers auxiliary information to the second UE 103. The auxiliary information is configured to indicate a capability of the first UE to obtain SI.

Step S602, the network device 101 transmits the SI to the first UE 102.

In the embodiment of the disclosure, the network device 101 transmits the corresponding SI based on the request from the relay UE 102. After the relay UE 102 successfully receives the SI, it may transfer the SI to the remote UE 103. If the relay UE 102 fails to receive the SI, it may promptly transmit a failure indication to the remote UE 103.

Based on the same idea as the above method embodiments, embodiments of the disclosure also provide a communication device that may have the functions of the first UE 102 in the above method embodiments and be used to perform the steps performed by the first UE 102 in the above embodiments. The functions may be realized by hardware, software or hardware executing corresponding software. The hardware or software includes one or more modules corresponding to the above-described functions.

In a possible implementation, the communication device 500 as shown in FIG. 5 may act as the first UE 102 involved in the above method embodiments and perform the steps performed by the first UE 102 in the above method embodiments. As illustrated in FIG. 5, the communication device 400 may include a transceiver module 401. The transceiver module 401 is used to support the communication device 400 to perform communication. The transceiver module 401 may have a wireless communication function, e.g., communicating wirelessly with other communication devices via a wireless interface.

When performing the steps performed by the first UE 102, the transceiver module 401 is configured to transfer auxiliary information to the second UE 103, in which the auxiliary information is configured to indicate a capability of the first UE 101 to obtain SI.

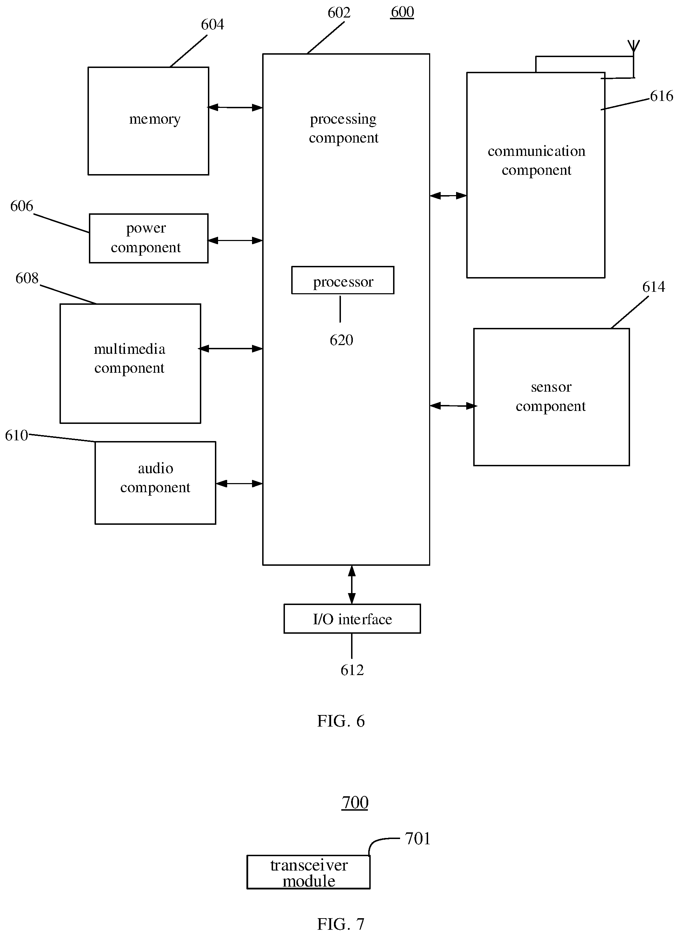

When the communication device is the first UE 102, its structure may also be illustrated as FIG. 6. The device 600 may be a mobile phone, a computer, a digital broadcasting terminal, a message transceiver device, a game console, a tablet device, a medical device, a fitness device and a PDA.

As illustrated in FIG. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communication, camera operations, and recording operations. The processing component 602 may include one or more processors 620 to perform instructions to implement all or part of the steps in the above described methods. Moreover, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, videos, etc. The memory 604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and a user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front-facing camera and/or a rear-facing camera. When the device 600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 610 is configured to output and/or input audio signals. For example, the audio component 610 includes a microphone (MIC) configured to receive an external audio signal when the device 600 is in an operation mode, such as a calling mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of a user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a Complementary Metal Oxide Semiconductor (CMOS) or Charge-Coupled Device (CCD) image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as Wi-Fi^{™}, 4G or 5G, or a combination thereof. In an exemplary embodiment, the communication component 616 receives a broadcast signal from an external broadcast management system or broadcast associated information via a broadcast channel. In an exemplary embodiment, the communication component 616 further includes a Near Field Communication (NFC) module to facilitate short-range communication. For example, the NFC module may be implemented based on a radio-frequency identification (RFID) technology, an Infrared Data Association (IrDA) technology, an Ultra-Wide Band (UWB) technology, a Bluetooth^{™} (BT) technology, and other technologies.

In the exemplary embodiments, the device 600 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

Based on the same concept as the above method embodiments, the embodiments of the disclosure also provide a communication device that has the functions of the second UE 103 in the above method embodiments, and is used to perform the steps executed by the second UE 103 in the above method embodiments. The functions can be implemented by a hardware, software or hardware executing corresponding software. The hardware or software includes one or more modules corresponding to the above functions.

In a possible implementation, the communication device 700 as shown in FIG. 7 may serve as the second UE 103 involved in the above method embodiments and perform the steps performed by the second UE 103 in the above method embodiments. As illustrated in FIG. 7, the communication device 700 may include a transceiver module 701. The transceiver module 701 is used to support the communication device 700 in performing communication, and the transceiver module 701 may have a wireless communication function, e.g., communicating wirelessly with other communication devices via a wireless interface.

When performing the steps implemented by the second UE 103, the transceiver module 701 is configured to receive auxiliary information transferred by a first UE 102, in which the auxiliary information is configured to indicate a capability of the first UE 102 to obtain SI.

When this communication device is the second UE 103, its structure may also be shown as FIG. 6.

Based on the same concept as the above method embodiments, the embodiments of the disclosure also provide a communication device having the functions of the network device 101 in the above method embodiments, which can be used to perform the steps executed by the network device 101 in the above method embodiments. The functions can be implemented by a hardware, software or hardware executing corresponding software. The hardware or software includes one or more modules corresponding to the above functions.

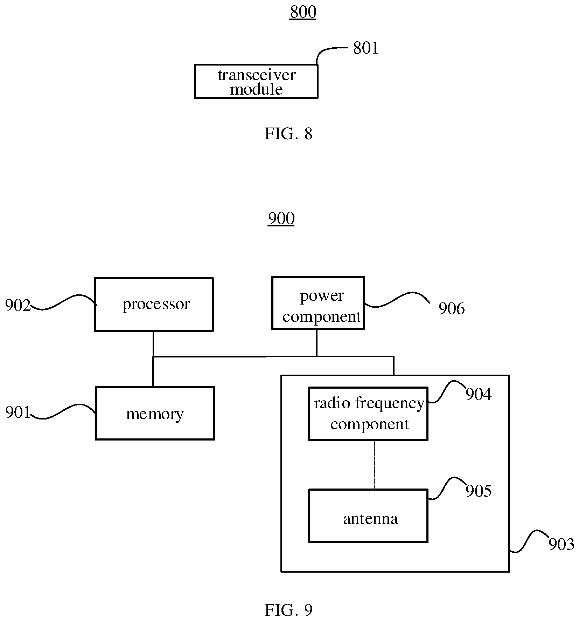

In a possible implementation, the communication device 800 as shown in FIG. 8 may serve as the network device 101 involved in the above method embodiments and perform the steps performed by the network device 101 in the above method embodiments. As illustrated in FIG. 8, the communication device 800 may include a transceiver module 801. The transceiver module 801 is used to support the communication device 800 in performing communication, and the transceiver module 801 may have a wireless communication function, e.g., communicating wirelessly with other communication devices via a wireless interface.

When performing the steps implemented by the network device 101, the transceiver module 801 is configured to transmit SI when receiving a request transmitted by the first UE 102 for obtaining SI corresponding to an SI request message.

When the communication device is a network device, its structure may also be illustrated in FIG. 9. The structure of the communication device is illustrated by taking a base station as an example of the network device 101. As illustrated in FIG. 9, the device 900 includes a memory 901, a processor 902, a transceiver component 903, and a power component 906. The memory 901 is coupled with the processor 902 and can be used to store programs and data necessary for the communication device 900 to implement each of the functions. The processor 902 is configured to support the communication device 900 to perform corresponding functions of the above methods, and the functions can be implemented by calling the programs stored in the memory 901. The transceiver component 903 may be a wireless transceiver, which may be used to support the communication device 900 to receive and transmit signaling and/or data through a wireless interface. The transceiver component 903 may also be called a transceiver unit or a communication unit. The transceiver component 903 may include a radio frequency component 904 and one or more antennas 905. The radio frequency component 904 may be a remote radio unit (RRU), which can be used for transmitting radio frequency signals and conversion between radio frequency signals and baseband signals. The one or more antennas 905 can be used for radiating and receiving radio frequency signals.

When the communication device 900 needs to transmit data, the processor 902 can perform baseband processing on the data to be transmitted, and transmit baseband signals to the RRU. The RRU performs radio frequency processing on the baseband signals and transmits the processed radio frequency signals in the form of electromagnetic waves through the antenna. When data is transmitted to the communication device 900, the RRU receives the radio frequency signals through the antenna, converts the radio frequency signals into the baseband signals, and transmits the baseband signals to the processor 902. The processor 902 converts the baseband signals into data and processes the data.

Other implementations of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples are considered as illustrative only, with the true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

### INDUSTRIAL PRACTICALITY

The first UE transfers the auxiliary information to the second UE, and the second UE is capable to learn the capability of the first UE to obtain the SI based on the auxiliary information. Thus, the second UE can transmit the SI request that conforms to an acquisition capability of the first UE to the first UE, so that the first UE is capable to obtain the SI required by the second UE from the network device within its own capability. Therefore, the problem of failing to acquire the SI due to an insufficient acquisition capability of the first UE can be solved.

## Claims

1. A method for transmitting auxiliary information, performed by a first user equipment (UE), comprising:
transferring auxiliary information to a second UE, wherein the auxiliary information is configured to indicate a capability of the first UE to obtain system information.

2. The method of claim 1, wherein the auxiliary information comprises at least one of:
indication information of system information that is capable to be obtained from a network device;
indication information of system information that is capable to be forwarded to the second UE;
version information of a standard version of the system information that is capable to be obtained from the network device; or
capability indication information of a transmission capability of a Uu interface.

3. The method of claim 1, further comprising:
receiving a system information request message from the second UE, wherein the system information request message comprises at least one of:
indication information for requesting system information;
indication information for requesting system information transmitted to the second UE;
version information of a standard version for requesting system information obtained from a network device; or
version information of a standard version of supported system information.

4. The method of claim 2 or 3, wherein the indication information comprises a system information block (SIB) identifier or a system information identifier.

5. The method of claim 4, wherein the system information identifier is a bit stream, each bit in the bit stream indicating system information indicated by an entry in a system information scheduling list in a first SIB (SIB1).

6. The method of claim 3, further comprising:
transmitting a request for obtaining system information corresponding to the system information request message to the network device, and transferring the system information to the second UE after successfully receiving the system information from the network device.

7. The method of claim 3, further comprising:
transmitting a request for obtaining system information corresponding to the system information request message to the network device, and transmitting a system information acquisition failure indication to the second UE after the system information is not successfully received from the network device.

8. A method for receiving auxiliary information, performed by a second user equipment (UE), comprising:
receiving auxiliary information transferred by a first UE, wherein the auxiliary information is configured to indicate a capability of the first UE to obtain system information.

9. The method of claim 8, further comprising:
in response to determining, based on the auxiliary information, that the first UE is incapable to obtain or transmit system information required by the second UE, performing at least one of following operations based on the auxiliary information:
triggering reselection of the first UE;
entering a connected state from an idle state or an inactive state; or
not transmitting a system information request message to the first UE.

10. The method of claim 8, further comprising:
in response to determining, based on the auxiliary information, that the first UE is capable to obtain system information required by the second UE, transmitting a system information request message to the relay UE.

11. The method of claim 10, wherein the system information request message comprises at least one of:
indication information of system information that is capable to be obtained from a network device;
indication information of system information that is capable to be forwarded to the second UE;
version information of a standard version of the system information that is capable to be obtained from the network device; and
capability indication information of a transmission capability of a Uu interface.

12. A communication device, comprising:
a transceiver module, configured to transfer auxiliary information to a second UE, wherein the auxiliary information is configured to indicate a capability of the first UE to obtain system information.

13. A communication device, comprising:
a transceiver module, configured to receive auxiliary information transferred by a first UE, wherein the auxiliary information is configured to indicate a capability of the second UE to obtain system information.

14. A communication device, comprising a processor and a memory, wherein
the memory is configured to store a computer program; and
the processor is configured to execute the computer program to perform the method of any one of claims 1-7.

15. A communication device, comprising a processor and a memory, wherein
the memory is configured to store a computer program; and
the processor is configured to execute the computer program to perform the method of any one of claims 8-11.

16. A computer-readable storage medium having stored thereon instructions that, when called and executed by a computer, cause the computer to perform the method of any one of claims 1-7.

17. A computer-readable storage medium having stored thereon instructions that, when called and executed by a computer, cause the computer to perform the method of any one of claims 8-11.
